**Europäisches Patentamt**

**European Patent Office**

**Office européen des brevets**

(11) Veröffentlichungsnummer: **0 444 530 A1**

## (12) EUROPÄISCHE PATENTANMELDUNG

(21) Anmeldenummer: 91102539.3

(51) Int. Cl.5: **C02F 1/72**, C02F 1/32

(22) Anmeldetag: 21.02.91

(30) Priorität: 21.02.90 DE 4005488

(43) Veröffentlichungstag der Anmeldung:
**04.09.91 Patentblatt 91/36**

(84) Benannte Vertragsstaaten:
**AT BE CH DE DK ES FR GB GR IT LI LU NL SE**

(71) Anmelder: **Wabner, Dietrich, Prof. Dr.**
**Danzigerstrasse 62**
**W-8046 Garching(DE)**

Anmelder: **Pettinger, Karl-Heinz, Dipl.-Chem.**
**Ulmenstrasse 5**
**W-8300 Landshut(DE)**

Anmelder: **Wimmer, Birgit**
**Rachelweg 14**

**W-8046 Garching(DE)**

(72) Erfinder: **Wabner, Dietrich, Prof. Dr.**
**Danzigerstrasse 62**
**W-8046 Garching(DE)**
Erfinder: **Pettinger, Karl-Heinz, Dipl.-Chem.**
**Ulmenstrasse 5**
**W-8300 Landshut(DE)**
Erfinder: **Wimmer, Birgit**
**Rachelweg 14**
**W-8046 Garching(DE)**

(74) Vertreter: **Patentanwälte Deufel, Hertel,**
**Lewald**
**Isartorplatz 6 Postfach 26 02 47**
**W-8000 München 26(DE)**

(54) **Verfahren und Vorrichtung zur Wasserentgiftung.**

(57) Die Erfindung betrifft ein Verfahren zur Entgiftung von Trinkwasser und Abwasser mittels UV-Licht und Wasserstoffperoxid und gegebenenfalls chemischen Aktivatoren im Durchflußverfahren, wobei man eine oder mehrere Niederdruck-UV-Lampe(n) (11) in Kombination mit geeignetem Abdichtungsmaterial (12) zwischen Lampe(n) und zu behandelndem Wasser verwendet, das die Abstrahlung von UV-Licht mit einer Wellenlänge von insbesonders 254 nm und darunter nicht behindert und das zu behandelnde Wasser in hinreichend dünner Schicht (18) an der oder den UV-Lampe(n) (12) vorbeiführt und dem zu behandelnden Wasserstrom an geeigneter Stelle (16) $H_2O_2$ zusetzt.

Figur 2:

Der Fallfilmreaktor

Die Erfindung betrifft ein kontinuierliches Verfahren und eine kontinuierlich arbeitende Vorrichtung zur Wasserentgiftung und/oder Entkeimung mittels Aktivierung von Wasserstoffperoxid durch UV-Licht, gegebenenfalls unter Zusatz von chemischen Aktivatoren.

Seit einigen Jahren befinden sich UV-Bestrahlungsanlagen zur Desinfektion von Trink- und Abwasser auf dem Markt. Eine typische Gruppe solcher Vorrichtungen sind die von der Firma Katadyn vertriebenen Vorrichtungen zur Wasserentkeimung mit Ultraviolettbestrahlung, wobei sich eine Klarfiltration anschließen kann, um das entkeimte Wasser weiter zu reinigen.

Ein zusätzliches Problem wird mehr und mehr die Entgiftung von Trinkwasser zur Beseitigung von Pflanzenschutzmitteln und die Entgiftung von Abwässern, z.B. auch Sickerwässern aus Altdeponien, z.B. zur hinreichenden Verminderung des Gehalts an Dioxinen.

Zum Probenaufschluß im Laboratorium zur Bestimmung von organisch gebundenem Kohlenstoff und/oder z.B. Chloriden sind diskontinuierlich arbeitende Geräte erhältlich, in denen mit Wasserstoffperoxid versetzte Proben mit sehr starken UV-Lampen bestrahlt werden.

Bei diesen Geräten werden meist Hochdruck-UV-Lampen verwendet, welche UV mit nennenswerten Anteilen von Wellenlängen über 280 nm abstrahlen.

Es gibt auch einige Vorschläge zur Anwendung von Niederdruck-UV-Lampen, wobei jedoch meist keine näheren Angaben über die Effizienz eines Durchflußverfahrens gemacht werden.

Nonnenmacher (Diplomarbeit Universität Karlsruhe 1984) zeigt die Verwendung einer Niederdrucklampe, die 184,9 und 253,7 nm abstrahlt, um mit $H_2O_2$ p-Toluolsulfonsäure in Wasser abzubauen. Er reichert das zu behandelnde Wasser mit $O_2$ an, da dies den Zerfall von $H_2O_2$ verbessern soll, und führt dann dieses $O_2$ angereicherte Wasser im Kreislauf, wobei der p-Toluolsulfonsäure-Abbau über Stunden gemessen wird. Der geringe Wirkungsgrad läßt vermuten, daß $TiO_2$-dotierte Schutzrohre verwendet wurden, welche die Wirksamkeit der kurzwelligen UV-Strahlung für $H_2O_2$ weitgehend vermindern. Dies ist üblich, da sonst im Wasser Ozonbildung stattfände.

Thiemann und Bandemer (DVGW-Schriftenreihe Wasser 107 (1988) Eschborn) zeigen die Verwendung von außen sitzenden Niederdruck-UV-Lampen für den Abbau von Pestiziden im Wasser, wobei jedoch keine Triazine abgebaut wurden. Neben einem Batchverfahren wird auch ein Durchflußverfahren beschrieben.

Hicke und Thiemann (Vom Wasser 69 (1987) 89-94) zeigen den Abbau ausgewählter Phosphorsäureester durch UV-Bestrahlung unter Verwendung von $H_2O_2$, wobei in stationärer und in Durchflußanlage gearbeitet wird.

Stachel et al. (gwf-wasser/abwasser 123 H.4 (1982) 190-194) zeigen den Abbau von Organochlorverbindungen durch UV-Bestrahlung bei gleichzeitiger Wasserstoffperoxid-Zugabe unter Wasserwerksbedingungen.

Für die Technik kommen nur Durchflußverfahren in Frage, um in vernünftiger Zeit brauchbare Wassermengen entgiften zu können. Batchverfahren sind eventuell für Haushaltszwecke anwendbar, wo es darum geht, Litermengen, z.B. für die Zubereitung von Baby-Nahrung zu entgiften. Aber auch im Haushalt wäre eine kleine Durchflußapparatur, die soviel Wasser entgiftet, wie normalerweise zum Kochen benötigt wird, gut brauchbar.

Demgemäß betrifft die Erfindung ein Durchflußverfahren und eine Durchflußapparatur zur Entgiftung von Wasser mittels UV und $H_2O_2$, die in technischem Maßstab einsetzbar sind und neben Bakterien auch z.B. Pflanzenschutzmittel und andere organische Giftstoffe abbauen.

Diese Aufgabe wird gelöst durch die Verwendung einer Niederdruck-UV-Lampe, welche die UV-Strahlung mit einer Wellenlänge von 300-180, insbesondere unterhalb 280, vor allem unter 270 nm, vorzugsweise von 254-180 nm und insbesondere die Quecksilberemissionslinie bei 254 nm zur Aktivierung von Wasserstoffperoxid, sowie kürzere Wellenlängen, insbesondere 186 bis 190 nm, emittiert, wobei durch geeignete Wahl des Materials vermieden wird, daß eine merkliche Absorption dieser aktiven UV-Wellenlänge durch das Schutzrohr erfolgt, und Verfahren und Vorrichtung eine derartige Schichtdicke des zu behandelnden Wassers festlegen, daß durch die gesamte Schichtdicke eine hinreichende Entgiftung und Reinigung erfolgt.

Das Wasserstoffperoxid, das gegebenenfalls mit chemischen Aktivatoren versehen sein kann, wobei hier Eisen(II)-Ionen bekannt sind, kann etwas vor dem oder im Bestrahlungsreaktor zudosiert werden. Wenn im Bestrahlungsreaktor zudosiert wird, soll dies am Anfang (in Laufrichtung des Wassers) erfolgen, damit das Wasserstoffperoxid während des gesamten Weges des Wassers an der UV-Lampe vorbei vorliegt.

Das wesentliche ist somit der Einsatz einer UV-Lampe sowie die Konstruktion der Apparatur, die gewährleistet, daß die sehr starke Quecksilber-Emissionslinie bei 254 nm im gesamten Bereich des zu behandelnden Wassers mit Wasserstoffperoxid in Interaktion treten kann. Um das Problem der geringen Transmission hochbelasteter Wässer zu umgehen, ist die Vorrichtung gemäß bevorzugter Ausführungsweisen in Form eines Fallfilm- oder eines Fließfilmreaktors ausgebildet. Wie noch ausgeführt wird, ist bei dieser Art von Apparatur ein Belegen der Lampenschutzrohre ausgeschlossen, so daß auch bei fortgesetztem Betrieb keine Beeinträchtigung der UV-Abstrahlung eintritt.

Damit können auch hochbelastete und stark verunreinigte Abwässer, z.B. Sickerwässer, entgiftet werden. Hierbei stellt sich ja häufig nicht das Problem einer vollständigen Entgiftung, sondern nur einer hinreichenden Verminderung an bestimmten Giftstoffen, z.B. Dioxinen, um diese Wässer dem normalen Abwasser zuführen zu können. Die mehr oder weniger starke Entgiftung kann natürlich durch die mehr oder weniger starke kombinierte $H_2O_2$/UV-Einwirkung, entweder durch Anwendung mehr oder weniger großer Lichtleistungen oder, was im Betrieb einfacher ist, durch mehr oder weniger lange Verweilzeiten, das heißt durch Veränderung der Fließgeschwindigkeit, gesteuert werden. Bei Trinkwasser, wo neben einer eventuellen Entgiftung vor allem das Problem der Zerstörung von Pflanzenschutzmitteln besteht, will man praktisch alle Giftstoffe durch Zersetzung entfernen, was ebenfalls wiederum am einfachsten durch die Fließgeschwindigkeit des zu behandelnden Wassers gesteuert werden kann.

Im Falle eines Tauchlampenreaktors kann auf sehr einfache Weise ein konventionelles UV-Desinfektionsgefäß mit einer Wasserstoffperoxid-Zudosierung versehen werden. Derartige Geräte eignen sich vor allem für die Trinkwasseraufbereitung, da hier ja das Wasser in direktem Kontakt mit dem Lampenschutzrohr kommt.

Es ist bekannt, daß Wasserstoffperoxid durch UV-Strahlung in Hydroxylradikale gespalten wird. Hydroxylradikale besitzen eine wesentlich größere Oxidationskraft als Wasserstoffperoxid selbst. Es findet somit eine Aktivierung des Wasserstoffperoxids statt.

Zur Entfernung von überschüssigem $H_2O_2$ kann ein üblicher Zersetzungskatalysator für $H_2O_2$ zugesetzt werden, zweckmäßig in Form eines Katalysatorbettes, das das Auswaschen von Katalysator in den behandelten Wasserstrom möglichst weitgehend vermeidet. Als Katalysator sind insbesondere zu nennen Aktivkohle oder Braunstein, jedoch wirken bekanntlich praktisch alle Nebengruppenelemente des periodischen Systems als Zersetzungskatalysatoren für Wasserstoffperoxid. Selbst wenn Zersetzungskatalysator in das behandelte Wasser austritt, kann dieser hinterher leicht abfiltriert werden, insbesondere wenn das Wasser noch, wie dies üblich ist, durch ein Sandbett geschickt wird. Diese Zersetzungsbehandlung für $H_2O_2$ wird bei geeigneter Dosierung desselben nicht immer nötig sein, so daß man das Katalysatorbett nach Bedarf zu- oder abschalten kann. Aus diesem Grund ist es in den folgenden Zeichnungen nicht berücksichtigt.

Im folgenden sollen nun drei Ausführungsformen der Vorrichtung anhand der beigefügten Zeichnungen erläutert werden:

Es bedeuten:

Fig. 1 einen Tauchlampenreaktor,

Fig. 2 einen Fallfilmrekator, und

Fig. 3 einen Fließfilm- oder Planfilmreaktor.

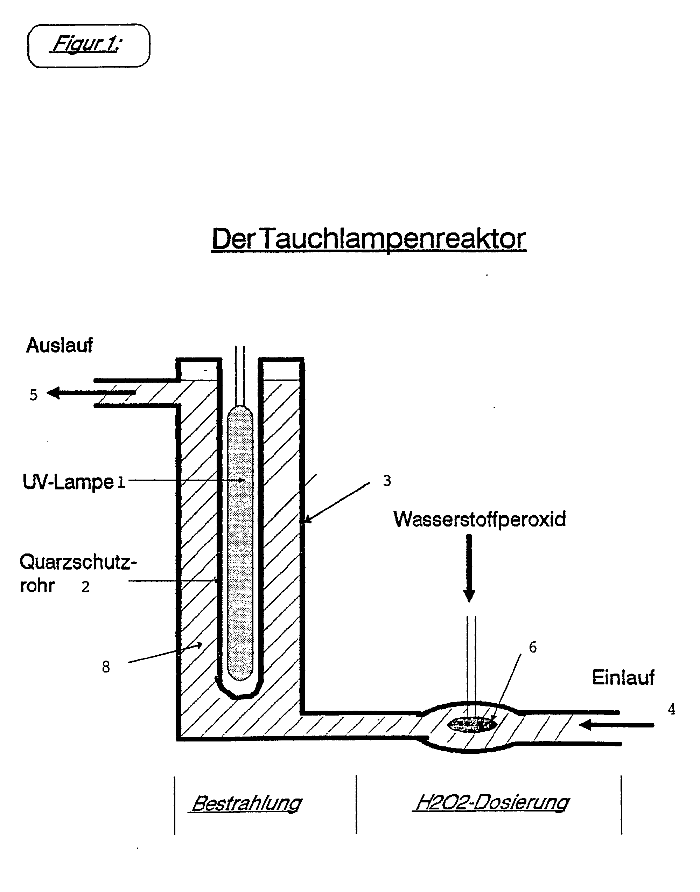

Der in Figur 1 gezeigte Tauchlampenreaktor enthält die UV-Lampe 1, eine Niederdruck-UV-Lampe, welche die Quecksilber-Emissionslinie bei 254 nm und kürzerwelliges UV emittiert. Die UV-Lampe 1 ist umgeben vom Quarzschutzrohr 2 (das auch aus UV-durchlässigem Kunststoff bestehen könnte), und somit aus einem Material besteht, welches den Durchtritt der Emissionslinie bei 254 nm und von kürzerwelligem UV, z.B. 186 bis 190 nm, nicht behindert.

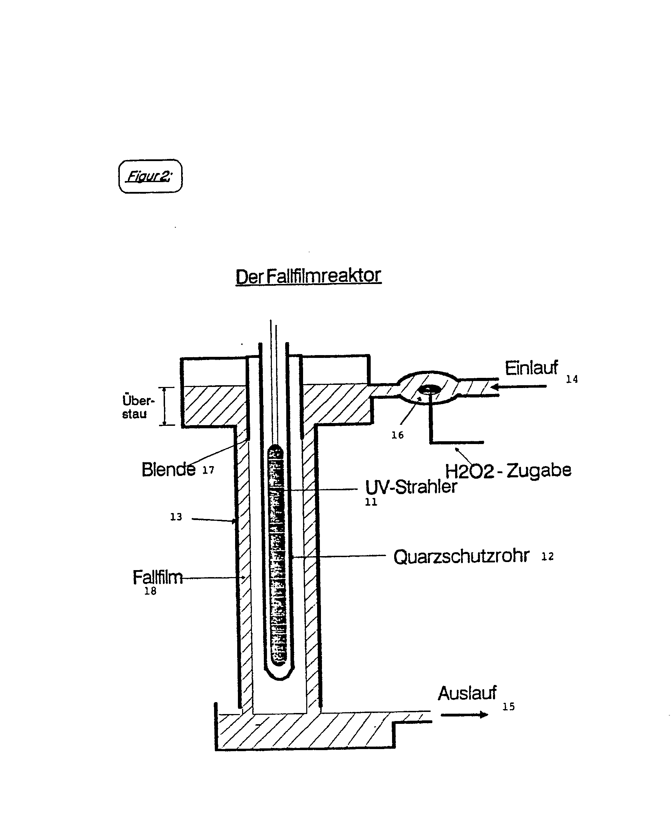

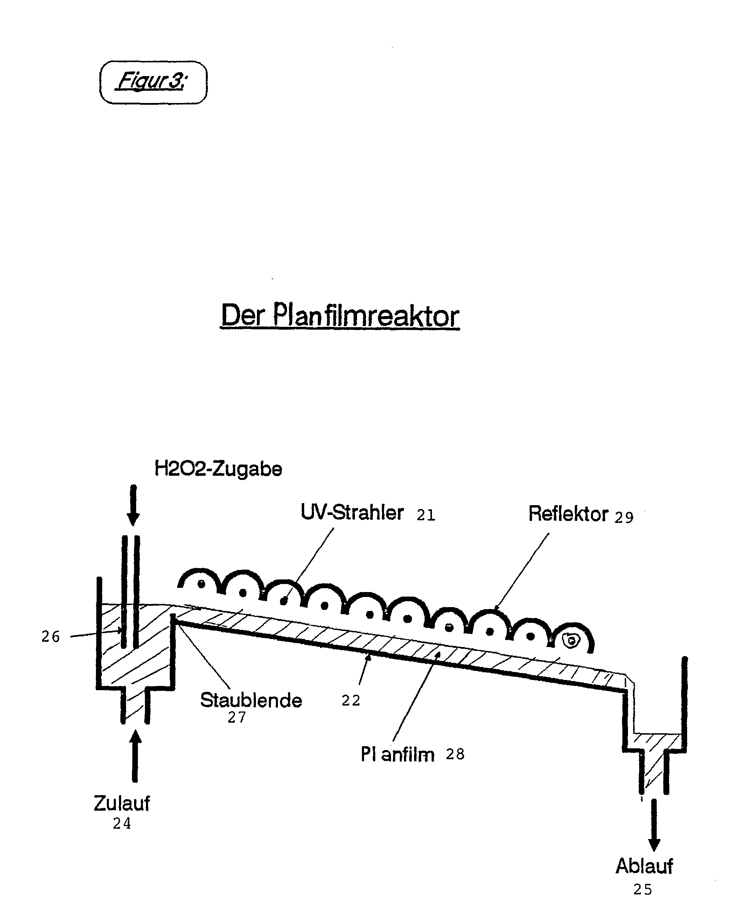

Das zu behandelnde Wasser 8 fließt durch ein das Quarzschutzrohr 2 umgebendes Rohr 3 mit dem Einlauf 4 und dem Auslauf 5, wobei in den Einlauf 4 die Zudosierung von Wasserstoffperoxid durch eine Dosierungsdüse 6 erfolgt. Eventuell ist durch geeignete Mischvorrichtungen eine homogene Verteilung des $H_2O_2$ sicherzustellen. Zweckmäßig kann an etwa der gleichen Stelle, wo $H_2O_2$ zudosiert wird, auch der chemische Aktivator zudosiert werden. Dies gilt auch für die in Fig. 2 und 3 gezeigten Vorrichtungen.

Die Schichtdicke des zu behandelnden Wassers 8 im Rohr 3 beträgt je nach Stärke der UV-Lampe z.B. 0,1 cm bis über 10 cm, was einem Rohrdurchmesser des Rohres 3, je nach Durchmesser der UV-Lampe und demnach Durchmesser des Quarzschutzrohres 2, von z.B. 3 bis 50 cm entspricht. Vorzugsweise sind jedoch die Schichtdicken des zu behandelnden Wassers zwischen 0,5 und 5 cm, wobei bei einer Schichtdicke von mehr als 0,5 bis 0,7 cm die Schicht intensiv gerührt werden sollte, damit alles zu behandelnde Wasser zeitweilig möglichst nahe an die UV-Lampe 1 kommt. Da derartige Flüssigkeitsrührer hinreichend bekannt sind, ebenso ihre wasserdichte Abdichtung, braucht dies nicht näher erläutert werden.

Selbstverständlich können mehrere UV-Lampen, insbesondere hintereinander, zur Erzielung einer größeren Länge der Wegstrecke der UV-Reaktion vorliegen und das für UV-Strahlung durchlässige Schutzrohr 2 kann auch aus mehreren ineinander gesteckten Schutzrohren bestehen, was bei größeren Apparaturen zweckmäßig sein kann. Zur Optimierung der Bestrahlung ist die zentrische Anordnung der Lampe bevorzugt.

Das Wasserstoffperoxid wird mittels einer Dosierpumpe zweckmäßig vor dem Bestrahlungsreaktor homogen durch die Dosierdüse 6 in dem zu bestrahlenden Medium verteilt. Die Dosierdüse 6 kann statt in den Einlauf 4 auch in den Reaktor 3 eingebaut sein, wo sie jedoch dann vorzugsweise am unteren Teil vorliegt, wenn das Wasser von unten nach oben strömt. Selbstverständlich kann die Strömungsrichtung auch umgekehrt sein, in welchem Falle dann die Dosierdüse 6 oben angebracht ist. Die Strömungsrichtung des Wassers durch den Reaktor ist für den Effekt gleichgültig.

Bei diesem Typ von Reaktor wird bei einem Durchsatz von 1 1/min zweckmäßig eine UV-Lampe von 8 Watt elektrischer Leistung und den Abmessungen 27 cm Länge und 2 cm Durchmesser verwendet, was ein Schutzrohr 2 von 2,7 cm Durchmesser und 35 cm Länge bedeutet, wobei vorzugsweise eine Schichtdicke von 0,5 bis 3 cm angewandt wird, also ein Rohrdurchmesser für das Reaktorrohr 3 von 3,7 bis 8,7 cm. Die durch die Düse 6 zudosierte Wasserstoffperoxidmenge beträgt 1 mg/l bis 10 g/l, je nach Verunreinigung, zweckmäßig 10 mg bis 1000 mg $H_2O_2$/l, das ist bei üblichem Perhydrol 30%ig eine Menge von 0,03 bis 3 $cm^3$/l zu behandelndem Wasser.

Der in Figur 2 gezeigte Fallfilmreaktor enthält wiederum den UV-Strahler 11, das Quarzschutzrohr 12 und das Reaktorrohr 13. Das Quarzschutzrohr 12 ist oberhalb der Apparatur und zweckmäßig über diese hinaus geführt. Im Einlauf 14 sitzt die Dosierdüse 16, an der das zu behandelnde Wasser vorbeiströmt und mit $H_2O_2$ versetzt wird. Das behandelte Wasser verläßt den Reaktor beim Auslauf 15. Dieser Reaktortyp enthält eine Blende 17, die dafür sorgt, daß das zu behandelnde Wasser mit leichtem Überdruck durch das Reaktorrohr 13 fließt. Natürlich kann dieser Überdruck, der den Fallfilm einstellt und stabilisiert, auch auf andere beliebige bekannte Weise erzeugt werden. Das Rohr 13 ist unten offen, also nicht flüssigkeitsdicht mit dem darunter stehenden Auffanggefäß plus Auslauf 15 verbunden, damit sich kein Gegendruck aufbaut. Auf diese Weise können Sonden, die in den Luftraum zwischen Fallfilm und Quarzschutzrohr eingeführt werden sollen, z.B. die später noch besprochenen Entlüftungsstutzen, ohne Bohrungen eingeführt werden.

Diese Vorrichtung bietet die Möglichkeit, Wasserstoffperoxid in Lösungen mit geringer Transmission für UV-Strahlung zu aktivieren, also in Wasser mit relativ viel UV absorbierender Substanz, da das zu bestrahlende Medium als Film an der Innenseite des Reaktionsrohres 13 herunterrieselt und dabei bestrahlt wird. Da Lösungen mit hoher Belastung an organischen Bestandteilen zur Bildung von Polymeren oder Belägen auf Oberflächen neigen, befindet sich zwischen dem Fallfilm 18 des zu behandelnden Wassers und dem Lampenschutzrohr 2 ein Luftspalt. Auf diese Weise kommt das Lampenschutzrohr 2 nicht mit der zu bestrahlenden Lösung 18 in Kontakt. Wesentlich zum Erreichen eines stabilen Filmes ist dabei, daß die Lösung 18 durch die Blende 17 mit leichtem Überdruck gedrückt wird. Dieser Überdruck entsteht durch die Überstau an Lösung 18 im oberen Teil des Reaktors 13.

Bei diesem Typ von Reaktor wird zweckmäßig eine UV-Lampe von 80 cm Länge, davon 70 cm Bestrahlungsstrecke, und 2 cm Durchmesser mit einer elektrischen Leistung von 40 Watt und einer UV-Leistung von 16 Watt angewandt. Das Lampenschutzrohr hat dann 100 cm Länge und einen Durchmesser von 2,7 cm.

Die Wand, an der der Film abläuft, ist ein Rohr, vorzugsweise aus Edelstahl, mit einer Länge von ebenfalls ca. 100 cm, in dem das Lampenschutzrohr konzentrisch angeordnet ist. Der Durchmesser dieses Reaktionsrohres 13 beträgt somit 3 bis 10 cm, je nach gewünschter Schichtdicke und Bestrahlungsstärke.

Der Abstand zwischen Lampe und zu behandelndem Wasserfilm wird so klein wie möglich gehalten, da dies eine hohe Bestrahlungsdosis ermöglicht. Eine untere Grenze bildet natürlich die eventuelle Berührung des Wassers mit dem Lampenschutzrohr bei kleinen Störungen im Film, wie z.B. Wellenbildung. Eine solche Berührung sollte nicht erfolgen, da sonst das Lampenschutzrohr verschmutzt werden kann und dieser Schmutz UV absorbieren könnte. Im typischen Fall liegt der Abstand zwischen 0,5 und 5 cm.

Der Film ist zweckmäßigerweise eine turbulenter Film (jedes Fluidelement soll einmal an die Oberfläche kommen), dessen Länge über das gesamte Rohr reicht, ohne daß eine Bachbildung (also die Ausbildung einzelner Rinnsale) eintritt. Die Filmdicke beträgt zweckmäßig 0,1 bis 2 mm, vorzugsweise etwa 0,5 mm. Tatsächlich können noch wesentlich dickere Filme realisiert werden, wenn das Wasser unter genügend Druck aus der Blende austritt.

Analog zu dem in Fig. 1 beschriebenen Tauchlampenreaktor liegt die zudosierte Peroxidmenge je nach Abbauproblem zwischen 1 mg/l und 10 g/l, insbesondere 10 mg bis 1000 mg/l.

Der Fallfilm ermöglicht wegen der verhältnismäßig hohen Fließgeschwindigkeit nur eine kurze Bestrahlungszeit. Nötigenfalls muß daher das zu behandelnde Wasser im Kreislauf geführt werden, so daß es mehrmals bestrahlt wird.

Der Durchsatz durch den Reaktor ist je nach Filmdicke variabel. Im typischen Fall werden bei der oben beschriebenen Anordnung 0,1 bis 10 1/min durchgesetzt.

Ein fallender Flüssigkeitsfilm reißt an seiner Oberfläche stets Luft mit. Um die Stabilität des Films zu vergrößern, sind vorzugsweise oben und ggfs. auch unten im Reaktor Be- und Entlüftungsstutzen eingebaut. Da dies als solches bekannt ist, brauchen diese Stutzen nicht näher beschrieben zu werden. Sie können ein Ventil oder einen Hahn enthalten, um bei Bedarf geöffnet oder geschlossen zu werden, so daß bei der Wasserbehandlung aus dem Wasser austretende, gasförmige Stoffe abgelassen oder abgesaugt werden können. Diese gasförmigen Produkte können, ggfs. nach vorherigem Aufnehmen in Wasser, im Kreislauf zum Zulauf des zu behandelnden Wassers zurückgeführt werden.

Selbstverständlich kann das Verfahren auch ohne Abführung der abgestrippten gasförmigen Stoffe unter dem sich aufbauenden Druck durchgeführt werden.

An der Oberfläche des Films findet Stoffaustausch mit dem umgebenden Gas statt. Dieser Effekt kann zusätzlich noch zur Strippung leicht flüchtiger Substanzen aus dem zu bestrahlenden Medium genutzt werden, wobei die abgestrippte, leicht flüchtige Substanz dann durch die Entlüftungsstutzen abgezogen, ggfs. auch abgesaugt werden kann. Insbesondere für diesen Fall ist es bevorzugt, auch Belüftungsstutzen am unteren Ende des Reaktors zu haben, während die Entlüftungsstutzen am oberen Ende des Reaktors angebracht sind.

Die Wasserstoffperoxidzugabe kann nicht nur im Reaktor erfolgen, wobei sie natürlich möglichst nahe am Einlauf des Wassers sitzen soll, sondern auch davor, wie in Fig. 2 gezeigt.

In Figur 3 ist ein Fließfilmreaktor oder Planfilmreaktor gezeigt, wobei eine größere Anzahl UV-Strahler 21 über einem Fließfilm 28 angeordnet sind, die zweckmäßig nach oben durch einen Reflektor 29 abgeschirmt sind. Zur Erzielung einer gewünschten Fließgeschwindigkeit ist die Fließebene vom Zulauf 24 zum Ablauf 25 mehr oder weniger geneigt, vorzugsweise in variabel einstellbar er Weise, wobei die Dicke des Fließfilmes 28 durch die Staublende 27 bestimmt wird, welche ebenfalls in ihrer Höhe variabel sein kann. Das Wasserstoffperoxid wird mit der Dosierdüse 26 zudosiert.

Damit ähnelt der Fließfilmreaktor dem Fallfilmreaktor. Die Lampen sind jedoch nicht in einem senkrechten Rohr, sondern über der zu bestrahlenden Fläche angeordnet. Auf diese Weise können große Bestrahlungsflächen bei geringem Abstand vom zu bestrahlenden Medium realisiert werden.

Das zu bestrahlende Medium fließt über die Staublende auf die geneigte, in Querrichtung waagrechte Fläche ab und wird nach der Bestrahlung in einer Sammelrinne wieder aufgefangen.

Vorzugsweise sind also die UV-Strahler im Abstand nebeneinander über einer in Laufrichtung des Wassers geneigten Unterlage in jeweils etwa gleichem Abstand zu dieser Unterlage angeordnet, insbesondere senkrecht zur Laufrichtung des Wassers, wobei vorzugsweise die UV-Strahler durch Reflektoren abgedeckt sind. Auch hier ist vorzugsweise am oberen Ende der geneigten Unterlage für das zu behandelnde Wasser eine Staublende 27 angeordnet, und zweckmäßig ist die gesamte Vorrichtung in einem gasdichten Kalten untergebracht, welcher Zu- und Ablauföffnungen sowie Öffnungen für Be- und Entlüftungsstutzen und ggfs. eine Absaugung aufweist. Zweckmäßig ist in den Zulauf der Vorrichtung oder an das Zulaufende des Reaktionsraums eine Dosierdüse für zufließendes Wasserstoffperoxid sowie gegebenenfalls eine Dosierdüse für chemische Aktivatoren eingebaut.

Die Peroxidzugabe kann auch hier wieder vor oder im Bestrahlungsapparat erfolgen. Vorzugsweise ist diese Vorrichtung ebenfalls, wie auch die nach Figur 2, in ein festes Gehäuse eingebaut, wobei insbesondere beim Fließfilmreaktor zusätzlich zur Abschirmung von UV-Strahlung auch eine Absaugung vorgesehen sein kann. Auch hier tritt wieder ein Strippeffekt ein, wenn leicht flüchtige Substanzen in dem zu behandelnden Wasser vorliegen. Die abgestrippten Gase können abgelassen oder abgesaugt werden. Wenn sie jedoch in der Abluft stören, können sie ebenso wie im Falle des Fallfilmreaktors nach Figur 2 im Kreislauf in den Eintritt des zu behandelnden Wassers zurückgeführt werden, ggfs. nach vorheriger Aufnahme in Wasser. Zum Beispiel können sie zweckmäßig in der Nähe der $H_2O$-Zugabedüse 26 bzw. 16 wieder in das zu behandelnde Wasser eingeführt werden, damit ein weiterer Abbau erfolgen kann.

Bei der gezeigten Ausführungsform werden Lampen und Lampenschutzrohre wie bei der unter Figur 2 beschriebenen Anordnung des Fallfilmreaktors benutzt. Auch hier ist der Abstand zwischen Lampe und Film so gering wie möglich, im typischen Falle 1 cm bis 10 cm.

Die zu bestrahlende Fläche, also die Unterlage 22, hat etwa 70 cm Breite, also wie die Strahlungslänge der Lampen und eine Länge von etwa 2 m, was bei einem Lampenabstand von ca. 10 cm (Mitte zu Mitte) 20 Lampen bedeutet. Die Parallelschaltung oder Hintereinanderschaltung solcher Flächen, also die Verbreiterung oder Verlängerung der Unterlage 22 ist natürlich möglich. Dann wird eben eine zweite Reihe oder eine längere Reihe von Lampen verwendet. Zur besseren Vermischung der Fluidelemente können kleine Wehre (nicht gezeigt) auf der Fläche waagrecht, also quer zur Fließrichtung angebracht sein, die natürlich zweckmäßig nicht so hoch sind wie die Staublende 27.

Der Durchsatz der gezeigten Vorrichtung mit einer Lampenreihe von 20 Lampen beträgt maximal 7000 bis 8000 1/h. Die Filmdicke ist variabel durch geeignete Einstellung der Höhe der Staublende 27 und durch Neigung der Fläche 22. Im Betrieb beträgt die Filmdicke zweckmäßig zwischen 0,1 und 5cm, insbesondere etwa o,5 bis 1 cm. Bei einer Anlage von 1,4 m Breite und 2 m Länge beträgt die Filmdicke bei praktisch horizontaler Stellung der Unterlage 22 (also praktisch ohne Neigung) 4 bis 6 cm bei einem Durchsatz von 15m³/h und einer Bestrahlungszeit von ca. 1 Minute.

Die Peroxiddosierung ist wie im Fallfilmreaktor je nach Verunreinigung zwischen 1 mg/l und 10 g/l und wie beim Fallfilmreaktor ist auch hier der Kreislaufbetrieb möglich und manchmal notwendig, wenn die Bestrahlungszeit nicht ausreicht, auch bei recht flacher Stellung der Unterlage 22, um den gewünschten Abbau zu erzielen.

Bei großen Systemen kann es notwendig werden, die UV-Strahler 21 zu kühlen, wobei entweder Luft durch den Spalt zwischen die Strahler 21 und die Reflektoren 29 durchgeblasen werden kann oder ein getrennter Kühlkreislauf mit Wasser außen auf den Reflektoren oder in Kühlrohren im Spalt zwischen den Strahlern und den Reflektoren vorgesehen sein kann. Man kann das Kühlwasser auch dem zu reinigenden Wasser selbst entnehmen, wobei aber zweckmäßig schon gereinigtes Wasser, also vom unteren Ende in der Nähe des Ablaufs 25, abgezweigt wird, um eine größere Verschmutzung der zu kühlenden Flächen zu vermeiden. Letztere Maßnahme empfiehlt sich aber nur, wenn das Wasser nach der Reinigung verhältnismäßig sauber ist.

Zur Aktivierung der UV-Einwirkung auf $H_2O_2$ ist es bekannt, Eisen(II)-Ionen als chemischen Aktivator zuzusetzen. Dies ist auch beim erfindungsgemäßen Verfahren möglich, aber bei Trinkwasser häufig nicht tunlich. Dies gilt auch für Cr, Ti, und V. Aus diesem Grunde wurden andere Aktivatoren gesucht und es wurde festgestellt, daß Aldehyde und Ketone, aber insbesondere Cyanamid ausgezeichnete Aktivatoren sind, die vor allem bei Atrazin und Dioxinen eine starke Aktivierung des Abbaus bewirken, wobei bei Atrazin eine praktisch völlige Zersetzung erfolgt und bei Dioxinen recht schnell 1 bis 2 Chloratome abgespalten werden, was zu toxisch unbedenklicheren Verbindungen führt. Es empfiehlt sich die Aktivierung mit Cyanamid oder $Fe^{2+}$, wobei bei Eisenionen zweckmäßig bei pH 2 bis 4 gearbeitet wird. Die Temperatur des zu behandelnden Wassers kann von eben über dem Gefrierpunkt bis zum Siedepunkt reichen. Das molare Verhältnis von $H_2O_2 : Fe^{2+}$ beträgt vorzugsweise etwa 10:1 bis 100:1.
Bei Cyanamid ist der pH-Wert vorzugsweise etwa 4. Der Temperaturbereich ist wie oben für Eisen angegeben und das molare Verhältnis von $H_2O_2$:Cyanamid beträgt vorzugsweise etwa 1:1 bis 10:1.

Für die anderen angegebenen Aktivatoren gelten etwa die gleichen Mengen für die Zudosierung wie oben, also ca. 100:1 bis 1:1.

Während die organischen chemischen Aktivatoren und Cyanamid bei der UV-Behandlung vollständig abgebaut und beseitigt werden können, kann für Eisen-Ionen eine übliche bekannte Enteisenung nachgeschaltet werden, wenn Eisen im behandelten Wasser stört.

## Patentansprüche

1. Verfahren zur Entgiftung von Trinkwasser und Abwasser mittels UV-Licht und Wasserstoffperoxid und gegebenenfalls chemischen Aktivatoren im Durchflußverfahren, dadurch gekennzeichnet, daß man eine oder mehrere Niederdruck-UV-Lampe(n) in Kombination mit geeignetem Abdichtungsmaterial zwischen Lampe(n) und zu behandelndem Wasser verwendet, das die Abstrahlung von UV-Licht mit einer Wellenlänge von 300-180 nm, insbesondere 254 nm und darunter und vorzugsweise 254-180 nm nicht behindert und das zu behandelnde Wasser in hinreichend dünner Schicht an der oder den UV-Lampe(n) vorbeiführt und dem zu behandelnden Wasserstrom an geeigneter Stelle $H_2O_2$ zusetzt.

2. Verfahren nach Anspruch 1, dadurch gekennzeichnet, daß man $H_2O_2$ dem zu behandelnden Wasser zusetzt, bevor oder gerade wenn es den Bereich der UV-Einwirkung erreicht.

3. Verfahren nach Anspruch 1 oder 2, dadurch gekennzeichnet, daß man das zu behandelnde Wasser in einer Schichtdicke von 0,1 bis 10 cm, insbesondere 0,5 bis 5 cm an der UV-Lampe vorbeiführt, wobei man vorzugsweise bei Schichtdicken des zu behandelnden Wassers über 0,5 cm eine kräftige Turbulenz im Wasser erzeugt.

4. Verfahren nach Anspruch 1 bis 3, dadurch gekennzeichnet, daß man das zu behandelnde Wasser an der Innenseite eines Reaktionsrohres als Fallfilm an der UV-Lampe vorbeiführt und einen Luftspalt zwischen dem Quarzschutzrohr und dem Fallfilm aufrechterhält, wobei vorzugsweise die Ausbildung des Fallfilmes und die Einstellung der Dicke von Film und Luftspalt durch Einstellen eines Überdruckes des zugeführten Wassers herbeigeführt wird und man insbesondere den Überdruck durch Einbau einer Staublende im Wasserzulauf herbeiführt.

5. Verfahren nach Anspruch 1 bis 3, dadurch gekennzeichnet, daß das zu behandelnde Wasser über eine geneigte Ebene unter einer Reihe von UV-Strahlen in hinreichend dünner Schicht durchgeführt wird, wobei vorzugsweise die Schichtdicke des zu behandelnden Wassers durch eine Staublende am oberen Ende einer geneigten Unterlage für das behandelte Wasser erzeugt wird, und insbesondere die Unterlage für die Schicht des zu behandelnden Wassers in ihrer Neigung verstellt werden kann.

6. Verfahren nach einem der mehreren der vorhergehenden Ansprüche, dadurch gekennzeichnet, daß man Aktivatoren, insbesondere Aldehyde, Ketone, Cyanamid oder Salze mehrwertiger Metalle, insbesondere $Fe^{2+}$-Ionen zusetzt.

7. Durchflußapparatur zur Entgiftung von Trinkwasser und Abwasser nach Anspruch 1 bis 6 mit einer oder mehreren UV-Lampen, einem zugeordneten Reaktiongefäß für das zu behandelnde Wasser mit Zu- und Ablauf und einer Wasserstoffperoxideinleitung sowie gegebenenfalls einer Einleitung für chemische Aktivatoren, gekennzeichnet durch (eine) UV-Niederdruck-Lampe(n) (1) in Kombination mit einem Reaktorrohr (2, 12) geeigneten Durchmessers oder einer geneigten Reaktorebene (22) geeigneter Neigung zur Aufrechterhaltung einer hinreichend dünnen Schicht (8, 18, 28) von zu behandelndem Wasser in der durchströmten Vorrichtung.

8. Vorrichtung nach Anspruch 15, dadurch gekennzeichnet, daß die UV-Lampe(n) von einem Schutzrohr umgeben ist (sind) und der Abstand zwischen der Außenseite dieses Schutzrohres (2) und der einen Seite des Reaktorrohres (3) 0,1 bis 10 cm, insbesondere 0,1 bis 5 cm beträgt.

9. Vorrichtung nach Anspruch 7 oder 8, dadurch gekennzeichnet, daß zusätzlich ein Rührer in dem Zwischenraum zwischen Schutzrohr (2) und Reaktorrohr (3) eingebaut ist.

10. Vorrichtung nach Anspruch 7 oder 8, dadurch gekennzeichnet, daß am Einlaß für das zu behandelnde Wasser eine Staublende (17) angebracht ist.

11. Vorrichtung nach Anspruch 10, dadurch gekennzeichnet, daß am oberen Ende des Reaktorrohres (13) nahe beim Schutzrohr (12) mindestens eine, gegebenenfalls verschließbare, Entlüftungsvorrichtung angebracht ist, wobei vorzugsweise auch am unteren Ende des Reaktorrohres (13) eine ggfs. verschließbare Belüftungsvorrichtung angebracht ist, die in den Luftraum zwischen Schutzrohr (12) und innerer Oberfläche des zu behandelnden Wassers (18) hineinreicht.

_Figur 1:_

# Der Tauchlampenreaktor

Auslauf

5

UV-Lampe 1

3

Wasserstoffperoxid

Quarzschutzrohr 2

6

8

Einlauf

4

| _Bestrahlung_ | _H2O2-Dosierung_ |

Figur 2:

## Der Fallfilmreaktor

Figur 3:

# Der Planfilmreaktor

H2O2-Zugabe

UV-Strahler 21

Reflektor 29

26

Staublende
27

22

Planfilm 28

Zulauf
24

Ablauf
25

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-4 012 321 (KOUBEK) <br> * Figur 1; Spalte 6, Zeilen 35-40 * <br> – – – | 1-3,7 | C 02 F 1/72 <br> C 02 F 1/32 |
| Y | WASSER - ABWASSER, Band 129, nr. 7, 1988, Seiten 484-491; H. SCHWARZER: "Oxidative Abwasser-Reinigung mit Wasserstoffperoxid" <br> * Seite 489, rechte Spalte, letzte zwei Absätze * <br> – – – | 1-3,7 | |
| A | PATENT ABSTRACTS OF JAPAN, Band 12, Nr. 110 (C-486), 8. April 1988; <br> & JP-A-62 234 591 (NIPPON DENKI KANKYO) 14-10-1987 <br> – – – | 1,7 | |
| A | EP-A-0 014 427 (SCHENCK) <br> * Seite 5, letzter Absatz - Seite 6, erster Absatz * <br> – – – | 1,7 | |
| A | PATENT ABSTRACTS OF JAPAN, Band 14, Nr. 17 (E-675), 16. Januar 1990; <br> & JP-A-01 258 794 (IWASAKI ELECTRIC LTD) 16-10-1989 <br> – – – – – | 1,7 | |

| | RECHERCHIERTE SACHGEBIETE (Int. Cl.5) |
|---|---|
| | C 02 F |

Der vorliegende Recherchenbericht wurde für alle Patentansprüche erstellt

| Recherchenort | Abschlußdatum der Recherche | Prüfer |
|---|---|---|
| Den Haag | 29 Mai 91 | KASPERS H.M.C. |